# EUROPÄISCHE PATENTSCHRIFT

(11) **EP 0 445 382 B1**
(45) Veröffentlichungstag und Bekanntmachung des Hinweises auf die Patenterteilung: **26.05.1993**
(21) Anmeldenummer: 90122994.8
(22) Anmeldetag: 30.11.1990
(51) Int. Cl.: G01L 9/12

(54) **Drucksensor und dessen Herstellverfahren**
Pressure transducer and its manufacturing method
Capteur de pression et son procédé de fabrication

(30) Priorität: 22.01.1990 EP 90810045
(43) Veröffentlichungstag der Anmeldung: 11.09.1991
(73) Patentinhaber: ENDRESS U. HAUSER GMBH U. CO., D-79689 Maulburg (DE)
(72) Erfinder: Hegner, Frank, Dr.-Ing., W-7850 Lörrach (DE); Frank, Manfred, Dipl.-Ing., W-7864 Maulburg (DE); Klähn, Thomas, Dipl.-Ing., W-7800 Freiburg-Opfingen (DE)
(74) Vertreter: Morstadt, Volker, Dipl.-Ing. c/o Endress + Hauser Flowtec AG

(56) Entgegenhaltungen:
- EP-A- 0 351 701
- DE-A- 2 706 505
- US-A- 4 198 670

## Beschreibung

Die Erfindung besteht nach Anspruch 1 in einem Drucksensor mit einem Grundkörper und einer Membran, die unter Bildung einer mindestens am Rand dicht abgeschlossenen Kammer in einem definierten Abstand parallel zueinander zusammengefügt sind, wobei Grundkörper und/oder Membran aus Keramik, Glas oder einem einkristallinen Material bestehen, die Membran auf der dem Grundkörper zugewandten Seite mit einer an deren freier Oberfläche von einer Schutzschicht bedeckten, als die eine Kondensator-Elektrode dienenden Schicht aus Silciumkarbid, Niob oder Tantal beschichtet ist, der Grundkörper innerhalb der Kammer auf der der Membran zugewandten Seite mit mindestens einer weiteren, an deren freier Oberfläche von einer weiteren Schutzschicht bedeckten, als Kondensator-Elektrode dienenden Schicht aus einem der genannten Materialien beschichtet ist und Grundkörper sowie Membran durch ein zugleich als Abstandshalter dienendes Formteil aus Aktivlot miteinander verlötet sind.

In der DE-A-27 06 505 ist ein Drucksensor mit einem Grundkörper und einer Membran, die unter Bildung einer mindestens am Rand dicht abgeschlossenen Kammer in einem definierten Abstand parallel zueinander zusammengefügt sind, beschrieben. Bei diesem Drucksensor bestehen Grundkörper und Membran aus Quarz oder einem anderen geeigneten Material; die Membran ist auf der dem Grundkörper zugewandten Seite mit einer als die eine Kondensator-Elektrode dienenden Schicht aus Chrom und Gold beschichtet; der Grundkörper trägt innerhalb der Kammer auf der der Membran zugewandten Seite in einer darin z.B. durch Ätzen gebildeten Ausnehmung eine zweite Kondensator-Elektrode, über deren Material nichts gesagt ist; Grundkörper und Membran sind durch eine dünne Schicht aus einer eutektischen Zinn-Gold-Legierung am Rand verlötet.

Schon wegen der Bildung der Ausnehmung, wozu ein gesonderter Verfahrensschritt erforderlich ist, ist die Herstellung dieses bekannten Drucksensors aufwendig. Außerdem ist die Materialauswahl begrenzt.

Ferner ist es aus der US-A-41 98 670 bekannt, die die eine Kondensator-Elektrode selbst bildende Membran eines kapazitiven Drucksensors aus einer Eisen-Chrom-Aluminium-Legierung herzustellen, die mit einer Aluminiumoxid-Schutzschicht bedeckt ist, um einen Kurzschluß bei Berührung mit einer zweiten, feststehenden Kondensator-Elektrode zu verhindern. Diese ist am Rand zusammen mit der Membran in einem als Träger bezeichneten Kunststoffgehäuse fixiert. Ein mit dem Grundkörper bei der Erfindung vergleichbarer Grundkörper fehlt somit.

Aus EP-A-0 351 701 (Stand der Technik gemäss Artikel 54 (3) EPÜ) ist bekannt, den Grundkörper und die Membran eines kapazitiven Drucksensors mittels eines Formteils aus Aktivlot miteinander zu verbinden. Dieses Formteil dient dabei gleichzeitig als Abstandhalter zwischen Grundkörper und Membran.

Nach Untersuchungen der Erfinder zeigen die üblichen Schichtmaterialien für Kondensator-Elektroden von Drucksensoren, nämlich z.B. Kupfer, Gold, Silber oder Platin, eine Reihe von nachteiligen Effekten, die beim Aktivlöten von Grundkörper und Membran, die mit den Elektroden beschichtet sind, auftreten. Zum einen breitet sich das Lot über die Elektrodenfläche ausserhalb der Fügestelle wegen seiner guten Benetzungsfähigkeit aus, wodurch Grundkörper und Membran im Elektrodenbereich verlötet werden können. Zum anderen legiert das Elektrodenmatieral der Membran, das nur z. B. 100 nm bis 500 nm dick sein kann, mit dem Lot so stark, dass es zu Unterbrechungen des elektrischen Kontaktes zwischen Lot und Elektrodenmaterial kommt.

Ferner haben die übliche reine Aluminiumoxid-Keramik und handelsübliche Aktivlote mit 1 bis 5 % Titan-Anteil eine grosse Differenz ihrer thermischen Ausdehnungskoeffizienten, so dass die Temperaturkoeffizienten des Nullpunkts bzw. der Empfindlichkeit des Drucksensors allfällig ungünstig beeinflusst werden können.

Auch gibt es einen Anwendungsfall von Drucksensoren, nämlich wenn sie als Referenzdrucksensoren benutzt werden, bei dem die Kammer mit dem Referenzdruckmedium, z.B. der Aussenluft, in Verbindung steht. Die darin enthaltene Feuchtigkeit gelangt in die Kammer und somit auch an die Kondensator-Elektroden, wo sie sich unter Umständen niederschlagen kann. Die Elektroden können durch die abgeschiedene Feuchtigkeit bei Anliegen einer elektrischen Spannung, die aus der Messschaltung für die druckabhängige Kapazitätsänderung stammt, korrodieren. Ferner erfordert die Kontaktierung der Elektroden mittels Aktivloteinsätzen im Grundkörper eine Stufenlötung, also mindestens zwei Lötschritte.

Schliesslich dürfen die mechanischen Eigenschaften der Membran nicht durch zu dicke Elektrodenschichten beeinträchtigt werden, weswegen die oben genannte Bemessung zwischen 100 nm und 500 nm erforderlich ist.

Die Aufgabe der in den Ansprüchen angegebenen Erfindung besteht somit darin, der geschilderten Problematik durch entsprechende Materialwahl zu entgehen, insbes. also für die Kondensator-Elektroden und deren Kontaktierungsstellen sowie für die Fügestellen geeignete Materialien zu finden, die die geschilderten Nachteile nicht haben und auch die Auswahl der Prozessparameter nicht zu stark einengen. Auch soll der Drucksensor bei höheren Temperaturen als Drucksensoren mit Glasfritte-Fügung einsetzbar sein, und die maximale Druck-Belastbarkeit der Membran soll nicht durch die Festigkeit der Fügestelle, sondern allein durch die des Membranmaterials gegeben sein. Schliesslich sollen die Herstellungskosten möglichst niedrig sein.

Es hat sich gezeigt, dass bei Verwendung eines der hochschmelzenden Metalle Niob und Tantal oder bei Verwendung von Siliciumkarbid als Elektrodenmaterial in einem weiten Löttemperaturbereich dessen Weglegieren durch das Aktivlot praktisch völlig vermieden werden kann. So widersteht z.B. eine nur 100 nm dicke Tantal-Schicht problemlos einem 1000°C-Lötprozess mit Aktivlot.

Das Ausbreiten des Aktivlots über die Elektroden und deren Korrosion werden durch die Elektroden-Schutzschichten verhindert, die bei den genannten Materialien ein eigenes Oxid ist. Im Falle des erwähnten Tantals ist dies also bevorzugt Tantalpentoxid. Diese Oxidschichten können in bekannter Weise durch thermische oder anodische Oxidation erzeugt werden. In der Kombination aller Eigenschaften ist Tantal das optimale Elektrodenmaterial. Obwohl es einen relativ hohen spezifischen elektrischen Widerstand hat, ergeben Drucksensoren mit 100 nm dicken Elektroden und 50 pF Kapazität eine Güte von 3x10⁴ bis 4x10⁴ bei einer Messfrequenz von 100 kHz.

Mit den genannten Materialien für die Elektroden ist nur ein einziger Lötprozess erforderlich, durch den sowohl Grundkörper und Membran gefügt als auch die Elektroden hochvakummdicht kontaktiert werden. Letzteres erfolgt bevorzugt von der membran-abgewandten Seite des Grundkörpers her mittels bis zu der zweiten Kondensator-Elektrode bezw. zum Aktivlot führender Aktivloteinsätze, wobei jede Kondensator-Elektrode des Grundkörpers an der Kontaktstelle einen Kapillarstopper in Form einer Aufweitung der den Aktivloteinsatz enthaltenden Bohrung aufweist.

Zu der Möglichkeit, nur noch diesen einzigen Lötprozess anwenden zu müssen, trägt auch der eben erwähnte Kapillarstopper bei, in den die Bohrungen im Grundkörper kammerseitig auslaufen können. Somit kann das Aktivlot, wenn es flüssig wird, nicht den geringen Spalt zwischen den gegenüberliegenden Kondensator- Elektroden auf Grund von Kapillarwirkungen überspringen, da es daran gehindert wird, bis zur Ebene der Elektrode des Grundkörpers vorzudringen.

Dieser einzige Lötprozess ist auch aus dem Wortlaut des Verfahrensanspruches 8 ersichtlich. Danach wird bei der Herstellung von Drucksensoren mit Membran und Grundkörper mit entsprechenden Bohrungen und allfällig zugehörigen Aufweitungen in folgenden Schritten vorgegangen:
- Aufbringen der Kondensator-Elektroden auf Membran und Grundkörper,
- Erzeugen der Schutzschichten auf den Kondensator-Elektroden,
- Einbringen der Aktivloteinsätze in die Bohrungen des Grundkörpers,
- Erhitzen von beschichtetem und bestücktem Grundkörper, beschichteter Membran und dazwischen angeordnetem Formteil aus Aktivlot, vorzugsweise in Vakuum, bis zum vollständigen Durchschmelzen des Aktivlots, und
- Abkühlenlassen dieser Anordnung.

Weitere Merkmale und Vorteile der Erfindung ergeben sich aus der folgenden Beschreibung von Ausführungsbeispielen, die in den Figuren der Zeichnung dargestellt sind, wobei gleiche Teile gleiche Bezugszeichen aufweisen.
- Fig. 1: zeigt eine Draufsicht auf einen Drucksensor nach einem ersten Ausführungsbeispiel der Erfindung,
- Fig. 2: zeigt eine Schnittansicht des Drucksensors von Fig. 1 entlang der Schnittlinie A-B,
- Fig. 3: zeigt in Schnittansicht als zweites Ausführungsbeispiel eine Weiterbildung des Drucksensors der Erfindung, und
- Fig. 4: zeigt in Schnittansicht als drittes Ausführungsbeispiel eine andere Weiterbildung des Drucksensors der Erfindung.

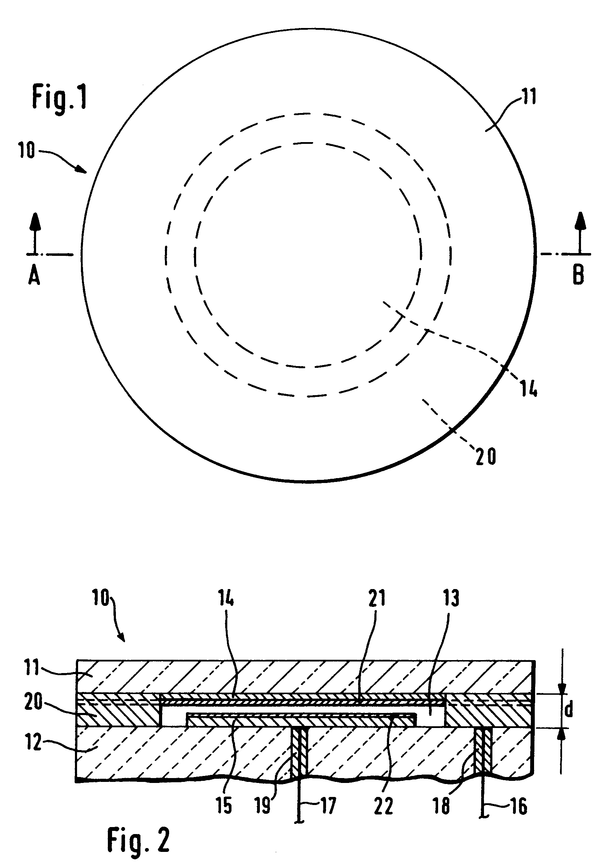

Der in den Fig. 1 und 2 dargestellte Drucksensor 10 hat eine Membran 11 in Form einer kreisrunden Scheibe mit planparallelen Flächen, die rings um den Umfang mit einem kreisrunden Grundkörper 12 in einem definierten Abstand d zusammengefügt ist, so dass zwischen der ebenen Oberseite des Grundkörpers 12 und der gegenüberliegenden Fläche der Membran 11 eine Kammer 13 gebildet ist. Die Membran 11 kann aus Keramik, Glas oder einem einkristallinen Material bestehen. Desgleichen kann der Grundkörper 12 aus Keramik, Glas oder einem einkristallinen Material bestehen, wobei jedoch die Materialien, aus denen die Membran 11 und der Grundkörper 12 bestehen, voneinander verschieden sein können. Die Membran 11 ist elastisch, so dass sie sich unter einem darauf einwirkenden Druck verformen kann. Der Grundkörper 12 kann massiv und starr sein, er kann aber auch, falls erwünscht, in gleicher Weise wie die Membran 11 als flache elastische Scheibe ausgebildet sein.

An den einander zugewandten Flächen der Membran 11 und des Grundkörpers 12 sind kreisförmige Kondensator-Elektroden 14 bzw. 15 aus Metall angebracht, die sich innerhalb der Kammer 13 im Abstand gegenüberliegen. Die Elektrode 14 bedeckt vollständig die Membran 11; sie kann jedoch auch nur im Kammerbereich angebracht sein. Die Elektroden 14, 15 sind an ihrer jeweiligen kammerseitigen freien Oberfläche mit jeweils einer Schutzschicht 21, 22 bedeckt. Diese besteht z.B. aus einem der Oxide des Materials, aus dem die Elektroden gebildet sind, wie es oben genannt ist.

Mit der Elektrode 14 ist ein Anschlussleiter 16 und mit der Leiterschicht 15 ein Anschlussleiter 17 verbunden, die gasdicht durch den Grundkörper 12 nach aussen geführt sind. Die beiden Elektroden bilden einen Kondensator, dessen Kapazität von dem Abstand zwischen den Leiterschichten abhängt. Wenn sich die Membran 11 unter der Einwirkung eines Drucks verformt, ändert sich der Abstand zwischen den beiden Elektroden und damit die Kapazität des Sensors, die mittels einer an die Anschlussleiter 16 und 17 angeschlossenen elektronischen Schaltung gemessen werden kann und daher ein Mass für den auf die Membran 11 einwirkenden Druck ist.

Dies kann z.B. ein von aussen dem Drucksensor allein zugeführter Druck sein, wenn die Kammer 13 evakuiert ist. Andererseits kann sie auch nach aussen offen sein, z.B. auf Grund einer im Grundkörper 12 vorhandenen Bohrung, so dass der Drucksensor als Referenzdrucksensor einsetzbar ist.

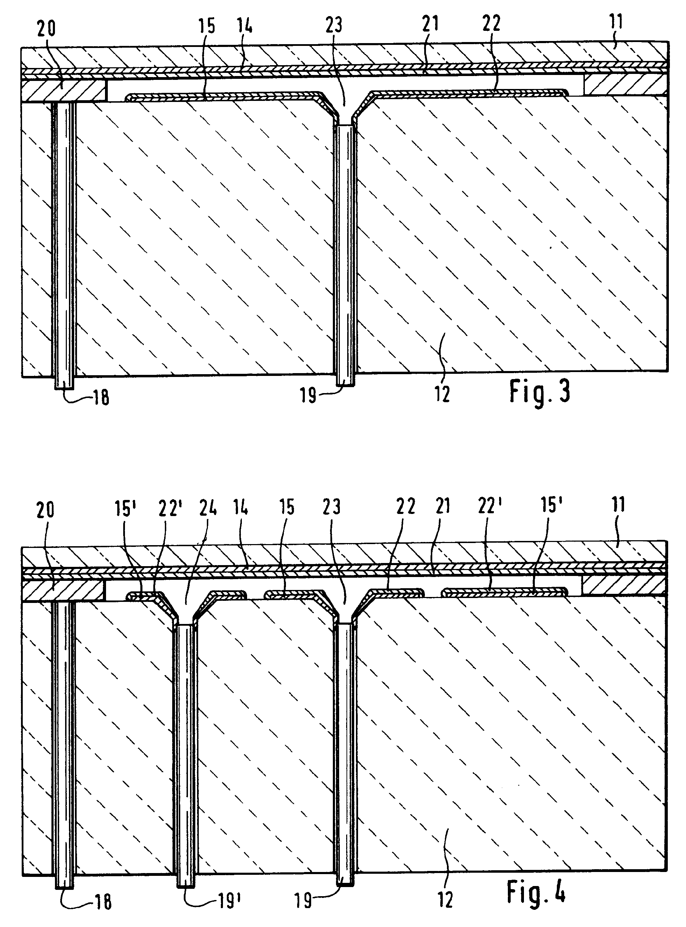

Bei der in Fig. 3 schematisch im Schnitt als zweites Ausführungsbeispiel dargestellten Weiterbildung des Drucksensors ist zur Vermeidung des Ueberspringens von Aktivlot des Aktivloteinsatzes 19 auf die Kondensator-Elektrode 14 der Membran 11 die Aufweitung 23 am kammerseitigen Ende der Bohrung vorgesehen, die den Aktivloteinsatz 19 aufnimmt. Beim Flüssigwerden von dessen Aktivlot werden die Kapillarkräfte somit unterbunden, die sonst das Aktivlot über die Elektrodenebene des Grundkörpers 12 hinauswachsen lassen würden. Die Aufweitung 23 wirkt und dient somit als Kapillarstopper.

Bei der in Fig. 4 schematisch im Schnitt als drittes Ausführungsbeispiel dargestellten anderen Weiterbildung des Drucksensors hat der Grundkörper 12 zwei voneinander getrennte Kondensator-Elektroden 15, 15', die konzentrisch angeordnet sind; die Elektrode 15' umgibt somit die im Zentrum als Kreisfläche angeordnete Elektrode 15 kreisringförmig. Die weitere Elektrode 15' - ist ebenso wie die Elektrode 15 von der Schutzschicht 22 - von einer weiteren Schutzschicht 22' bedeckt. Die weitere Elektrode 15' wird durch den weiteren Aktivloteinsatz 19' kontaktiert. Dieser Aufbau mit zwei Kondensatoren, die eine gemeinsame Elektrode, nämlich die Elektrode 14 der Membran 11, haben, ist selbstverständlich auch beim Ausführungsbeispiel der Fig. 1 und 2 anwendbar.

In Fig. 4 hat ferner auch die Bohrung des weiteren Aktivloteinsatzes 19' an ihrem kammerseitigen Ende eine Aufweitung 24, die die gleichen Wirkungen und Vorteile wie die Aufweitung 23 hat und ermöglicht. In den Fig. 3 und 4 sind aus Vereinfachungsgründen die Anschlussleiter an den Aktivloteinsätzen 18, 19, 19' weggelassen.

Die Kontaktierung der Membran-Elektrode 14 erfolgt beim fertigen Drucksensor über das Aktivlot 20 der Fügestelle und den Anschlussleiter 16. Dieser wie auch der Anschlussleiter 17 sind mit den Aktivlot-Einsätzen 18, 19 kontaktiert, die bis zur Grundkörper-Elektrode 15 und, wie erwähnt, über das Aktivlot 20 an der Fügestelle zur Membran-Elektrode 14 führen. Dieser ist an der Fügestelle gestrichelt angedeutet.

In bevorzugter Ausgestaltung der Erfindung bestehen die Kondensator-Elektroden 14, 15, 15' aus Tantal und deren Schutzschichten 21, 21, 22' aus Tantalpentoxid.

Eine Besonderheit des dargestellten Drucksensors besteht in der Art und Weise, wie die Membran 11 und der Grundkörper 12 zusammengefügt sind. Dies geschieht durch ein ringförmiges Formteil aus Aktivlot 20, das die Verbindung zwischen der Membran 11 und dem Grundkörper 12 herstellt und zugleich als Abstandshalter dient, indem es die Membran 11 in einem definierten Abstand d von dem Grundkörper 12 hält. Zur Herstellung der Verbindung wird ein thermisches Verfahren angewendet, das eine direkte Verbindung der Membran 11 und des Grundkörpers 12 mit dem Aktivlot 20 ohne vorheriges Aufbringen einer Metallisierung auf den nichtmetallisierten Teil der Fügestelle des Grundkörpers 12 und ohne Anwendung eines Flussmittels ermöglicht. Dadurch wird über das Formteil aus Aktivlot 20 eine mechanisch äusserst feste und vollkommen gasdichte Verbindung zwischen der Membran 11 und dem Grundkörper 12 erhalten, so dass die Kammer 13 z.B. vollkommen gasdicht nach aussen abgeschlossen ist.

Aktivlot ist ein Lot, das wenigstens ein stark reaktives Element, wie Titan, Zirconium, Beryllium, Hafnium oder Tantal enthält. Diese reaktiven Elemente benetzen die Oberfläche der zu verlötenden Teile während des Lötens. Falls diese Teile aus Oxidkeramik bestehen, bewirkt die hohe Affinität der reaktiven Elemente zum Sauerstoff eine Reaktion mit der Keramik, was zur Bildung von Mischoxiden und freien chemischen Valenzen führt. Die reaktive Komponente des Lotes ist in eine Matrix anderer Legierungselemente, wie Silber/Kupfer, eingebettet. Diese bilden das eigentliche Lotmaterial.

Duktile Aktivlot-Legierungen enthalten zwischen 1 bis 5 % Titan, das homogen in einer Matrix von z.B. Silber/Kupfer eingebettet ist. Diese Legierungen können wie normale Hartlote zu beliebigen Formteilen ausgebildet werden, also auch zu dem in Fig. 2 dargestellten, als Abstandshalter dienenden ringförmigen Formteil.

Typische im Handel befindliche Aktivlote sind die Legierungen Silber/Titan, Silber/Kupfer/Titan oder Silber/Kupfer/Indium/Titan, deren Löttemperaturen zwischen 750°C und 1050°C liegen. Stufenlötungen (Abstufungen in den Schmelzpunkten) sind also auch bei Aktivloten möglich. Die Festigkeiten der Aktivlote sind identisch mit den Festigkeiten vergleichbarer titan-freier Hartlote. Die Haftfestigkeit an der Keramik ist grösser als die Festigkeit der Keramik selbst; im Zugversuch liegt daher der Bruch in der Keramik, nicht in der Grenzschicht Keramik-Lot.

Die Verlötung der Keramikteile mittels des Aktivlots erfolgt vorzugsweise im Vakuum bei mindestens 10⁻⁵ mbar, besser im Bereich von 10⁻⁶ mbar. Sehr gutes Vakuum ist erforderlich, um Reaktionen des Titans mit dem Restgas zu vermeiden und eine gute Benetzung der Keramik zu erreichen.

Zur Erzielung bestimmter Lötergebnisse, beispielsweise zur Verminderung des Abdampfens des Lotes oder zur Reduktion von Oberflächenoxiden, kann es zweckmässig sein, den Aufheiz- bzw. Lötvorgang in einer definierten Gasatmospähre aus inertem Gas und/oder Reaktivgas vorzunehmen. Die Partialdrücke dieser Gase liegen vorzugsweise unter 10 mbar.

Wie beim üblichen Löten wird auch beim Aktivlöten das Lot vollständig durchgeschmolzen. Die Löttemperatur muss aber beim Aktivlot zweckmässigerweise 30°C bis 100°C über der Liquidustemperatur liegen, damit eine optimale Reaktion des Titans mit der Keramik erhalten wird. Dadurch wird eine hohe Festigkeit und Vakuumdichtheit erzielt.

Ausser diesen duktilen Aktivloten können bei der Erfindung auch spröde eingesetzt werden. Ueberraschenderweise hat sich nämlich gezeigt, dass bei Temperaturschockzyklen trotz Unterschieden in den Ausdehnungskoeffizienten des Membran/Grundkörper-Materials und des spröden Aktivlots die Eigenschaften des Drucksensors nicht verändert werden. Spröde Aktivlote bestehen z.B. aus 30% bis 60% Kupfer, Rest Zirconium oder 24% Nickel/76% Zirconium oder 36% bis 75% Kupfer/64% bis 25% Titan. Diese Aktivlote sind in Form von gesinterten Ringen oder Lötpaste zwischen Grundkörper und Membran zu applizieren.

Bevorzugt können die Aktivlotringe auch durch das sogenannte melt-spinning-Verfahren hergestellt werden, durch das das Lot zunächst in amorpher Form als duktile Folie erzeugt wird. Dadurch ist es weitgehend mechanisch bearbeitbar und in jede beliebige Form zu bringen. Nach dem Löten erhält das Lot dann seine kristallinen Eigenschaften.
Wie Messungen zeigen, werden die Eigenschaften von mit derartigen spröden Aktivloten gefügten Drucksensoren durch tausende Temperaturschockzyklen zwischen -20°C und +140°C nicht verändert. Insbesondere entstehen keine Haarrisse, die die Kammer - falls Vakuumdichtheit beabsichtigt - undicht werden liessen.

Auch Untersuchungen der Fügestelle zeigen keinerlei Gefügeveränderungen. Durch die Verwendbarkeit auch spröder Aktivlote ist die Auswahl der aneinander anzupassenden Materialien von Membran/Grundkörper und Aktivlot grösser als bisher.

## Patentansprüche

1. Drucksensor (10) mit einem Grundkörper (12) und einer Membran (11), die unter Bildung einer mindestens am Rand dicht abgeschlossenen Kammer (13) in einem definierten Abstand (d) parallel zueinander zusammengefügt sind, wobei
- Grundkörper (12) und/oder Membran (11) aus Keramik, Glas oder einem einkristallinen Material bestehen,
- die Membran (11) auf der dem Grundkörper (12) zugewandten Seite mit einer an deren freien Oberfläche von einer Schutzschicht (21) bedeckten, als die eine Kondensator-Elektrode (14) dienenden Schicht aus Siliciumkarbid, Niob oder Tantal beschichtet ist,
- der Grundkörper (12) innerhalb der Kammer (13) auf der der Membran (11) zugewandten Seite mit mindestens einer weiteren, an deren freien Oberfläche von einer weiteren Schutzschicht (22) bedeckten, als Kondensator-Electrode (15, 15') dienenden Schicht aus einem der genannten Materialien beschichtet ist und
- Grundkörper (12) sowie Membran (11) durch ein zugleich als Abstandshalter dienendes Formteil aus Aktivlot (20) miteinander verlötet sind.

2. Drucksensor (10) nach Anspruch 1 mit zwei auf dem Grundkörper (12) innerhalb der Kammer (13) auf der der Membran (11) zugewandten Seite voneinander getrennten, konzentrisch angeordneten Kondensator-Elektroden (15, 15') aus Siliziumkarbid, Niob oder Tantal, deren freie Oberfläche mit einer Schutzschicht (22, 22') bedeckt ist.

3. Drucksensor nach Anspruch 1 oder 2 mit einer vollständig mit der Kondensator-Elektroden (14) beschichteten Membran (11).

4. Drucksensor nach einem der Ansprüche 1 bis 3 mit Kondensator-Electroden (14, 15) aus Tantal und mit Schutzschichten (21, 22), die daraus durch thermische oder anodische Oxidation erzeugt sind.

5. Drucksensor nach einem der Ansprüche 1 bis 4 mit elektrischer Kontaktierung der Kondensator-Elektroden (14, 15) von der membranabgewandten Seite des Grundkörpers (12) her mittels jeweils eines Aktivloteinsatzes (19, 19'), der zur jeweiligen Kondensator-Elektrode (15, 15') auf dem Grundkörper (12) führt, und mittels eines weiteren Aktivloteinsatzes (18), der zum Formteil (20) aus Aktivlot führt, das mit der Kondensator-Elektrode (14) auf der Membran (11) in Kontakt steht, wobei jede Kondensator-Elektrode (15, 15') des Grundkörpers (12) an der Kontaktstelle einen Kapillarstopper in Form einer Aufweitung (23, 24) der den Aktivloteinsatz (19, 19') enthaltenden Bohrungen aufweist.

6. Drucksensor nach einem der Ansprüche 1 bis 5 mit einem auf der Basis einer Silber-Kupfer-Legierung, die als reaktives Element Titan enthält, als duktilem Aktivlot.

7. Drucksensor nach einem der Ansprüche 1 bis 5 mit einem spröden Aktivlot auf der Basis von Kupfer/Zirconium, Nickel/Zirconium oder Kupfer/Titan.

8. Verfahren zum Herstellen eines Drucksensors nach einem der Ansprüche 5 bis 7 aus Membran und Grundkörper mit entsprechenden Bohrungen und allfällig zugehörigen Aufweitungen in folgenden Schritten:
- Aufbringen der Kondensator-Elektroden auf Membran und Grundkörper,
- Erzeugen der Schutzschichten auf den Kondensator-Elektroden,
- Einbringen der Aktivloteinsätze in die Bohrungen des Grundkörpers,
- Erhitzen von beschichtetem und bestücktem Grundkörper, beschichteter Membran und dazwischen angeordnetem Formteil aus Aktivlot, vorzugsweise in Vakuum, bis zum vollständigen Durchschmelzen, des Aktivlots, und
- Abkühlenlassen dieser Anordnung.

## Claims

1. A pressure sensor (10) comprising a substrate (12) and a diaphragm (11) which are joined together in a defined spaced relationship (d) and parallel to each other, forming a chamber (13) sealed at least at the edge, wherein
- the substrate (12) and/or the diaphragm (11) are made of ceramic, glass, or a single-crystal material,
- the side of the diaphragm (11) facing the substrate (12) is covered with a layer of silicon carbide, niobium, or tantalum which serves as one capacitor electrode (14) and whose free surface is covered with a protective layer (21),
- within the chamber (13), the side of the substrate (12) facing the diaphragm (11) is covered with at least one additional layer of any one of said materials which serves as a capacitor electrode (15, 15') and is covered with a further protective layer (22), and
- the substrate (12) and the diaphragm (11) are soldered together by a formed part of active solder (20) which also serves as a spacer.

2. A pressure sensor (10) as claimed in claim 1, comprising two spaced-apart, concentric capacitor electrodes (15, 15') of silicon carbide, niobium, or tantalum which are provided within the chamber on the side of the substrate (12) facing the diaphragm (11) and are each covered with a protective layer (22, 22').

3. A pressure sensor as claimed in claim 1 or 2, comprising a diaphragm (11) completely covered with the capacitor electrode (14).

4. A pressure sensor as claimed in any one of claims 1 to 3, comprising capacitor electrodes (14, 15) of tantalum and protective layers (12, 22) formed therefrom by thermal or anodic oxidation.

5. A pressure sensor as claimed in any one of claims 1 to 4 wherein electrical contact is made to the capacitor electrodes (14, 15) from the side of the substrate (12) remote from the diaphragm by means of an active-solder insert (19, 19') extending to the respective capacitor electrode (15, 15') on the substrate (12) and by means of a further active-solder insert (18) extending to the formed part (20) of active solder, which is in contact with the capacitor electrode (14) on the diaphragm, with each capacitor electrode (15, 15') of the substrate (12) having at the contact point a capillary stopper in the form of a flare (23, 24) of the holes containing the active-solder insert (19, 19').

6. A pressure sensor as claimed in any one of claims 1 to 5 with a ductile active solder based on a silver-copper alloy containing titanium as a reactive element.

7. A pressure sensor as claimed in any one of claims 1 to 5 with a brittle active solder based on copper/zirconium, nickel/zirconium, or copper/titanium.

8. A method of manufacturing a pressure sensor comprising a diaphragm and a substrate as claimed in any one of claims 5 to 7, with the substrate having suitable holes, which are flared where necessary, comprising the steps of
- depositing the capacitor electrodes on the diaphragm and the substrate,
- forming the protective layers on the capacitor electrodes,
- introducing the active-solder inserts into the holes in the substrate,
- heating the coated substrate with the active-solder inserts therein, the coated diaphragm, and the interposed formed part of active solder, preferably in a vacuum, until the active solder has melted through, and
- allowing this assembly to cool down.

## Revendications

1. Capteur de pression (10) comportant un corps de base (12) et une membrane (11), qui sont réunis à une distance définie (d) l'un de l'autre et de manière à être parallèles l'un à l'autre, en formant une chambre (13) fermée de manière étanche au moins sur son bord,
- le corps de base (12) et/ou la membrane (11) étant réalisés en céramique, en verre ou en un matériau monocristallin,
- la membrane (11), sur la face dirigée vers le corps de base (12), étant revêtue d'une couche de carbure de silicium, de niobium ou de tantale, formant une électrode de condensateur (14) et recouverte sur sa surface libre, d'une couche de protection (21),
- le corps de base (12), à l'intérieur de la chambre (13), sur la face dirigée vers la membrane (11), étant revêtu d'au moins une autre couche en un des matériaux cités, formant électrode de condensateur (15, 15') et recouverte sur sa surface libre d'une autre couche de protection (22), et
- le corps de base (12) ainsi que la membrane (11) étant reliés l'un à l'autre par brasage au moyen d'une pièce de forme en brasure active (20) faisant simultanément office d'entretoise.

2. Capteur de pression (10) selon la revendication 1, comportant sur le corps de base (12), à l'intérieur de la chambre (13), sur la face dirigée vers la membrane (11), deux électrodes de condensateur (15, 15') qui sont séparées l'une de l'autre et sont disposées concentriquement l'une par rapport à l'autre, qui sont réalisées en carbure de silicium, en niobium ou en tantale, et dont la surface libre est recouverte d'une couche de protection (22, 22').

3. Capteur de pression selon la revendication 1 ou 2, comportant une membrane (11) totalement recouverte par l'électrode de condensateur (14).

4. Capteur de pression selon l'une des revendications 1 à 3, comportant des électrodes de condensateur (14, 15) en tantale et comportant des couches de protection (21, 22) formées à partir de ces électrodes, par oxydation thermique ou anodique.

5. Capteur de pression selon l'une des revendications 1 à 4, comportant le contact électrique entre chacune des électrodes de condensateur (14, 15) et la face du corps de base (12) éloignée de la membrane, au moyen d'un insert respectif de brasure active (19, 19') qui conduit à l'électrode de condensateur correspondante (15, 15') sur le corps de base (12), et au moyen d'un autre insert de brasure active (18) conduisant à la pièce de forme (20) en brasure active, qui est en contact avec l'électrode de condensateur (14) sur la membrane (11), chacune des électrodes de condensateur (15, 15') du corps de base (12) comportant, à l'endroit du contact, un arrêt de capillaire sous la forme d'un évasement (23, 24) du perçage correspondant renfermant l'insert de brasure active (19, 19').

6. Capteur de pression selon l'une des revendications 1 à 5, comportant une brasure active ductile à base d'un alliage cuivre-argent renfermant du titane en guise d'élément réactif.

7. Capteur de pression selon l'une des revendications 1 à 5, comportant une brasure active fragile, à base de cuivre/zirconium, nickel/zirconium ou cuivre/titane.

8. Procédé de fabrication d'un capteur de pression selon l'une des revendications 5 à 7, comprenant membrane et corps de base comportant les perçages appropriés et les éventuels évasements correspondants, selon les étapes suivantes:
- application des électrodes de condensateur sur la membrane et le corps de base,
- réalisation des couches de protection sur les électrodes de condensateur,
- introduction des inserts de brasure active dans les perçages du corps de base,
- chauffage du corps de base revêtu et muni des inserts, de la membrane revêtue, et de la pièce de forme en brasure active disposée entre-eux, de préférence sous vide, jusqu'à la fusion complète de la brasure active, et
- étape consistant à laisser refroidir cet ensemble.
